# EUROPEAN PATENT SPECIFICATION

(11) **EP 3 325 316 B1**
(45) Date of publication and mention of the grant of the patent: **10.04.2019**
(21) Application number: 16725464.8
(22) Date of filing: 19.05.2016
(51) Int. Cl.: B60R 25/0215

(54) **ELECTRICAL STEERING COLUMN LOCK**
ELEKTRISCHES LENKRADSCHLOSS
DISPOSITIF DE VERROUILLAGE DE COLONNE DE DIRECTION ÉLECTRIQUE

(30) Priority: 17.07.2015 EP 15177310; 15.02.2016 EP 16155654
(43) Date of publication of application: 30.05.2018
(73) Proprietor: U-Shin Deutschland Zugangssysteme GmbH, 85253 Erdweg (DE)
(72) Inventor: KALIEBE, Lukas, 85253 Erdweg (DE); LAVAL, Anthony, 85253 Erdweg (DE); LEHMEIER, Norbert, 85253 Erdweg (DE); GRENOUILLAT, Régis, 85253 Erdweg (DE)
(74) Representative: Gaillarde, Frédéric F. Ch.
(86) International application number: PCT/EP2016/061303
(87) International publication number: WO 2017/012736

(56) References cited:
- EP-A1- 2 829 441
- DE-A1- 10 235 365
- DE-A1-102006 021 986
- JP-A- H09 215 261
- US-A1- 2006 053 921

## Description

The invention relates to an electrical steering column lock, as well as a vehicle comprising such an electrical steering column lock.

Electrical steering column lock generally comprises a motor configured to drive a bolt by means of a worm gear and a cam. The bolt is then driven along a load direction in order to be engaged in or to be disengaged from the steering column.

In the prior art electrical steering column lock, a washer may be disposed in the load direction of the motor so as to absorb the axial forces of the motor shaft. However, because of the axial integration of the motor, such washer is not sufficient for absorbing the high forces necessary to lock and to unlock the bolt.

Moreover, due to the design of the motor, there is a possibility of having a play between the motor and the casing of the steering column lock, and more precisely along the motor axis which is the rotation axis of the worm gear. In particular, this play causes a "clack" noise when the motor starts, and a noise when the motor is operating.

US 2006/0053921 A discloses an electrical steering column lock as defined by the preamble of claim 1.

An object of the invention is to propose an electrical steering column which is reliable, efficient and present less noise than in the prior art.

To this end, the invention relates to an electrical steering column lock for locking and unlocking a steering column according to the features of claim 1.

Advantageously, the elastic element pushing against the washer enables to preload the motor axis such that the axial play is prevented.

According to further embodiments which can be considered alone or in combination:
- the washer is a washer disc; and/or
- the elastic element is disposed in order to press against the washer, so that the motor axis is preloaded according to the motor axis; and/or
- the elastic element is an elastic ball; and/or
- the elastic element is made in an elastomeric material; and/or the elastic element is associated with a return means; and/or
- the return means is a compression spring; and/or
- the elastic element is disposed in a cavity made in the housing; and/or
- the washer presents two flats faces in contact with the motor and the elastic element; and/or
- the washer is a flat disc made in steel.

According to another aspect, the invention relates to a vehicle comprising an electrical steering column lock according to the invention.

Other features and advantages of the present invention will become apparent from the following description of non-limitative embodiment, with reference to the attached drawings in which:

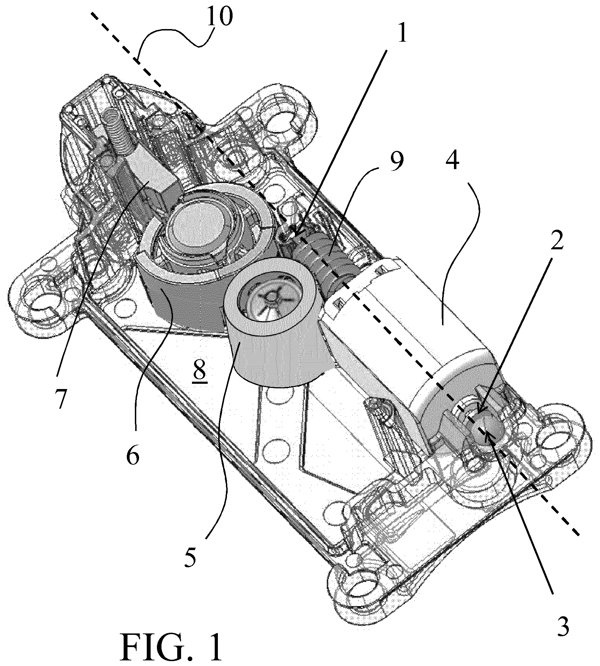

- figure 1 is a space view of an electrical steering column lock according to a preferred embodiment of the invention;

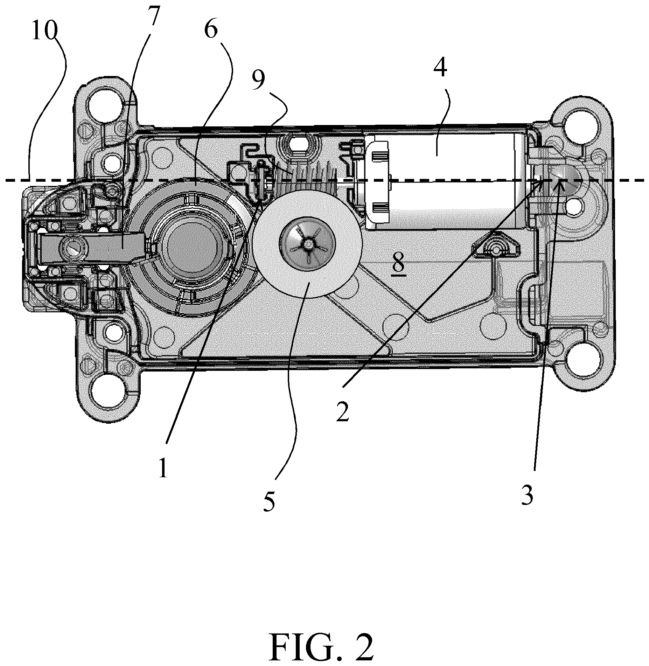

- figure 2 is a side view of the electrical steering column lock of figure 1; and

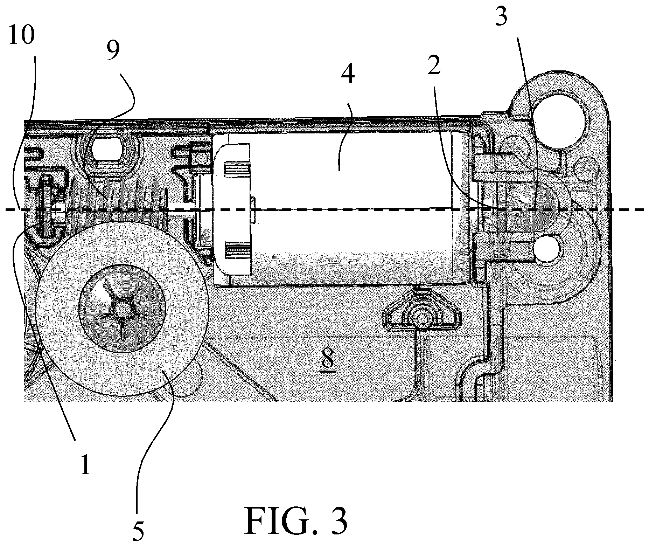

- figure 3 is a close view of the upper right part of figure 2.

Referring to the figures, the invention relates to an electrical column lock for locking and unlocking a steering column (not represented). The electrical steering column lock is housed in a housing 8.

The electrical steering column lock comprises a motor 4 received in the housing 8. The motor 4 is configured to drive a motor shaft in rotation around a motor rotation axis 10.

The motor shaft comprises a driving part 9 configured to drive a bolt 7 between a lock and an unlock position of the steering column. In the lock position, the bolt 7 engages the steering column. In the unlock position, the bolt 7 is disengaged from the steering column.

The driving part 9, which is preferably a worm, drives directly or indirectly the bolt 7 between the lock and unlock positions. According to an embodiment, the driving part drives two or more wheels 5, 6 driving the bolt 7 between the lock and unlock positions.

The electrical steering column lock of the invention further comprises a washer 2 disposed at an end of the motor shaft so that the motor shaft rotates against said washer.

The electrical steering column lock of the invention further comprises an elastic element 3 disposed between the washer 2 and the housing 8. The elastic element 3 is in contact with the washer 2 and the housing 8.

Advantageously, the elastic element 3 pushing against the washer 2 enables to preload the motor axis such that the axial play is prevented. Consequently, the steering column lock is less subject to wear in use, which improves its reliability and efficiency, the lifetime of the motor is improved, and the operating noise of the motor is reduced. Moreover, such configuration allows preventing the "clack" noise when the motor starts.

The motor shaft crosses through the motor 4.

In particular, the motor has a working face enabling to drive the bolt 7 and a fixing face enabling the fixation of the motor 4 in the housing 8. As shown in the figures, the centers of the working and fixing faces may be aligned with the motor rotation axis 10.

According to the invention, the washer 2 is disposed at a fixing face of the motor 4 such as being in contact with the said fixing face, and the elastic element 3 is put in contact with a face of the washer 2 opposite to the fixing face of the motor 4.

According to an embodiment, the electrical steering column lock further comprises a working washer 1 placed in the load direction on the side of the working face of the motor 4. Preferably, the working washer is placed such that the driving part 9 is placed between the working washer 1 and the working face of the motor 4. Advantageously, the washer 1 allows absorbing the axial forces of the motor shaft.

In a preferred embodiment of the invention, the electrical steering column lock comprises the working washer 1 placed at the working face of the motor 4 and the washer 2 placed at the fixing face of the motor 4.

In the preferred embodiment of the invention, one among the two ends of the motor and of the motor shaft is directed to the driving of the bolt 7 and the other is directed to the preload of the motor axis.

The arrangement of the preferred embodiment of the invention enables preventing axial play of the motor shaft. Such a steering column lock is less noisy with respect to the ones of the prior art.

According to an embodiment, the washer 2 is a washer disc. The washer could also have another shape, for instance the washer may have nonplanar ends, such as a conical washer. Preferably, the working washer 1 is a washer disc.

According to an embodiment, the elastic element 3 is disposed in order to press against the washer 2, so that the motor axis 10 is preloaded according to the motor axis.

According to an embodiment, the motor 4 extends along an axial direction and the load direction of the motor is the axial direction of the motor 4.

According to an embodiment, the elastic element 3 is an elastic ball. The elastic ball enables to have a uniform shape.

According to an embodiment, the elastic element 3 is made in an elastomeric material.

According to an embodiment, the elastic element 3 is associated with a return means.

According to an embodiment, the return means is a compression spring.

The elastic element 3 could also be a return means such as a spring, for instance a cylindrical spring, or an assembly of two or more parts, one of which is a return means such as a cylindrical spring.

According to an embodiment, the elastic element 3 is disposed in a cavity made in the housing 8. Such an arrangement enables to have a fixed position of the elastic element 3 in the housing 8.

According to an embodiment, the washer 2 presents two flats faces in contact with the motor 4 and the elastic element 3.

According to an embodiment, the washer is a flat disc made in steel.

The invention further relates to a vehicle comprising an electrical steering column lock as described above.

Such a vehicle is less noisy with respect to the ones of the prior art concerning the use of the steering column lock.

The invention has been described above with the aid of embodiments without limitation of the general inventive concept as defined in the claims.

Many modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. Electrical steering column lock for locking and unlocking a steering column, comprising:
- a motor (4) received in a housing (8) and configured to drive in rotation around a motor rotation axis a motor shaft, the motor shaft crossing through the motor (4) and comprising a driving part configured to drive a bolt (7) between a lock and an unlock position of the steering column, the motor having a working face enabling to drive the bolt (7) and a fixing face enabling the fixation of the motor (4) in the housing (8),
- a washer (2) disposed at an end of the motor shaft so that the motor shaft rotates against said washer, the washer (2) being disposed at the fixing face of the motor (4) such as being in contact with the said fixing face,
- an elastic element (3) disposed between the washer (2) and the housing (8), the elastic element (3) being in contact with the washer (2) and the housing (8),
the electrical steering column lock being **characterized in that** said elastic element (3) is put in contact with a face of the washer (2) opposite to the fixing face of the motor (4).

2. Electrical steering column lock according to any of the preceding claims, wherein the washer (2) is a washer disc.

3. Electrical steering column lock according to any of the preceding claims, wherein the elastic element (3) is disposed in order to press against the washer (2), so that the motor axis is preloaded according to the motor axis.

4. Electrical steering column lock according to any of the preceding claims, wherein the elastic element (3) is an elastic ball.

5. Electrical steering column lock according to any of the preceding claims, wherein the elastic element (3) is made in an elastomeric material.

6. Electrical steering column lock according to any of the preceding claims, wherein the elastic element (3) is associated with a return means.

7. Electrical steering column lock according to the preceding claim, wherein the return means is a compression spring.

8. Electrical steering column lock according to any of the preceding claims, wherein the elastic element (3) is disposed in a cavity made in the housing (8).

9. Electrical steering column lock according to any of the preceding claims, wherein the washer (2) presents two flats faces in contact with the motor (4) and the elastic element (3).

10. Electrical steering column lock according to any of the preceding claims, wherein the washer is a flat disc made in steel.

11. Vehicle comprising an electrical steering column lock according to any of the preceding claims.

## Patentansprüche

1. Elektrisches Lenkradschloss zum Verriegeln und Entriegeln einer Lenksäule, umfassend:
- einen Motor (4), der in einem Gehäuse (8) aufgenommen und konfiguriert ist, um in Drehung um eine Motordrehachse eine Motorwelle anzutreiben, wobei die Motorwelle den Motor (4) quert und einen Antriebsteil umfasst, der konfiguriert ist, um einen Bolzen (7) zwischen einer verriegelten und einer entriegelten Position der Lenksäule anzutreiben, wobei der Motor eine Arbeitsfläche aufweist, die es ermöglicht, den Bolzen (7) anzutreiben, und eine Befestigungsfläche, die die Befestigung des Motors (4) im Gehäuse (8) ermöglicht,
- einen Dichtungsring (2), der an einem Ende der Motorwelle angeordnet ist, so dass sich der Motorschaft gegen diesen Dichtungsring dreht, wobei der Dichtungsring (2) an der Befestigungsfläche des Motors (4) angeordnet ist, um mit der Befestigungsfläche in Kontakt zu sein,
- ein elastisches Element (3), das zwischen dem Dichtungsring (2) und dem Gehäuse (8) angeordnet ist, wobei das elastische Element (3) mit dem Dichtungsring (2) und dem Gehäuse (8) in Kontakt ist,
wobei das elektrische Lenkradschloss **dadurch gekennzeichnet ist, dass** das elastische Element (3) mit einer Fläche des Dichtungsrings (2) gegenüber der Befestigungsfläche des Motors (4) in Kontakt gebracht ist.

2. Elektrisches Lenkradschloss nach einem der vorhergehenden Ansprüche, wobei der Dichtungsring (2) eine Dichtungsringscheibe ist.

3. Elektrisches Lenkradschloss nach einem der vorhergehenden Ansprüche, wobei das elastische Element (3) angeordnet ist, um gegen den Dichtungsring (2) zu drücken, so dass die Motorachse gemäß der Motorachse vorgeladen ist.

4. Elektrisches Lenkradschloss nach einem der vorhergehenden Ansprüche, wobei das elastische Element (3) ein elastischer Ball ist.

5. Elektrisches Lenkradschloss nach einem der vorhergehenden Ansprüche, wobei das elastische Element (3) aus einem elastomeren Material hergestellt ist.

6. Elektrisches Lenkradschloss nach einem der vorhergehenden Ansprüche, wobei das elastische Element (3) mit einem Rückstellmittel assoziiert ist.

7. Elektrisches Lenkradschloss nach dem vorhergehenden Anspruch, wobei das Rückstellmittel eine Druckfeder ist.

8. Elektrisches Lenkradschloss nach einem der vorhergehenden Ansprüche, wobei das elastische Element (3) in einem Hohlraum, hergestellt im Gehäuse (8), angeordnet ist.

9. Elektrisches Lenkradschloss nach einem der vorhergehenden Ansprüche, wobei der Dichtungsring (2) zwei flache Flächen in Kontakt mit dem Motor (4) und dem elastischen Element (3) aufweist.

10. Elektrisches Lenkradschloss nach einem der vorhergehenden Ansprüche, wobei der Dichtungsring eine flache Scheibe, hergestellt aus Stahl, ist,

11. Fahrzeug, umfassend ein elektrisches Lenkradschloss nach einem der vorhergehenden Ansprüche.

## Revendications

1. Antivol électrique de direction pour verrouiller et déverrouiller une colonne de direction, comprenant :
- un moteur (4) reçu dans un boîtier (8) et configuré pour entraîner en rotation, autour d'un axe de rotation du moteur, un arbre de moteur, l'arbre de moteur traversant le moteur (4) et comprenant une partie d'entraînement configurée pour entraîner un pêne (7) entre une position de verrouillage et une position de déverrouillage de la colonne de direction, le moteur ayant une face de travail permettant d'entraîner le pêne (7) et une face de fixation permettant la fixation du moteur (4) dans le boîtier (8),
- une rondelle (2) disposée au niveau d'une extrémité de l'arbre de moteur de sorte que l'arbre de moteur tourne contre ladite rondelle, la rondelle (2) étant disposée au niveau de la face de fixation du moteur (4) de manière à être en contact avec ladite face de fixation,
- un élément élastique (3) disposé entre la rondelle (2) et le boîtier (8), l'élément élastique (3) étant en contact avec la rondelle (2) et le boîtier (8), l'antivol électrique de direction étant **caractérisé en ce que** ledit élément élastique (3) est mis en contact avec une face de la rondelle (2) opposée à la face de fixation du moteur (4).

2. Antivol électrique de direction selon l'une des revendications précédentes, dans lequel la rondelle (2) est un disque de rondelle.

3. Antivol électrique de direction selon l'une des revendications précédentes, dans lequel l'élément élastique (3) est disposé afin d'exercer une pression contre la rondelle (2), de sorte que l'axe de moteur soit préchargé selon l'axe de moteur.

4. Antivol électrique de direction selon l'une des revendications précédentes, dans lequel l'élément élastique (3) est une boule élastique.

5. Antivol électrique de direction selon l'une des revendications précédentes, dans lequel l'élément élastique (3) est réalisé en un matériau élastomère.

6. Antivol électrique de direction selon l'une des revendications précédentes, dans lequel l'élément élastique (3) est associé à un moyen de rappel.

7. Antivol électrique de direction selon la revendication précédente, dans lequel le moyen de rappel est un ressort de compression.

8. Antivol électrique de direction selon l'une des revendications précédentes, dans lequel l'élément élastique (3) est disposé dans une cavité formée dans le boîtier (8).

9. Antivol électrique de direction selon l'une des revendications précédentes, dans lequel la rondelle (2) présente deux faces plates en contact avec le moteur (4) et l'élément élastique (3).

10. Antivol électrique de direction selon l'une des revendications précédentes, dans lequel la rondelle est un disque plat réalisé en acier.

11. Véhicule comprenant un antivol électrique de direction selon l'une des revendications précédentes.
